# EUROPEAN PATENT SPECIFICATION

(11) **EP 1 582 123 B1**
(45) Date of publication and mention of the grant of the patent: **14.02.2007**
(21) Application number: 05011803.3
(22) Date of filing: 25.04.2001
(51) Int. Cl.: A47J 27/21

(54) **Liquid heating vessels**
Wassererhitzungsgerät
Bouilloire

(30) Priority: 25.04.2000 GB 0010088
(43) Date of publication of application: 05.10.2005
(62) Divisional of application: 01923836.9
(73) Proprietor: STRIX LIMITED, Ronaldsway, Isle of Man IM9 2RG (GB)
(72) Inventor: Scott, Michael James, Port St. Mary Isle of Man IM9 5PH (GB); Beaumont, Nigel, Port Erin Isle of Man IM9 6PL (GB)
(74) Representative: Samuels, Adrian James

(56) References cited:
- EP-A- 0 636 332
- DE-A- 19 706 216
- DE-U- 29 903 592
- GB-A- 2 330 064

## Description

The present invention relates to liquid heating vessels and in particular to a system for mounting a generally planar heating element in the bottom of a liquid heating vessel.

In the United Kingdom, liquid heating vessels such as kettles and hot water jugs have traditionally employed sheathed heating elements which extend into the vessel through an aperture in the wall or base of the vessel. However, in recent times there has been a move to replace such heating elements with planar heating elements which form at least part of the base of the vessel. Such heaters typically comprise a sheathed heating element suitably bonded to the underside of a plate, a thick film resistive heating track applied to the underside of a plate, or a sheathed heating element insert cast into a die casting. Examples of some such heaters are shown in WO 96/18331. Such heaters have the advantage of being more easily cleaned and of giving a more aesthetic appearance to the liquid heating vessel.

Various systems have been proposed for mounting planar heaters in the bottom of liquid heating vessels, particularly plastics walled vessels. WO 96/18331 referred to above proposes clamping a channel formed on the heater around a depending flange formed on the vessel body. Whilst this system provides an extremely sound fixing with excellent sealing, it is not easily removable if a vessel needs to be reworked (if for example a heater is found to be faulty on final test) and it cannot be used in certain shapes of vessel where a depending flange cannot be formed or where access to the exterior of the flange for crimping is not possible. This is particularly so with the more stylish "bullet" style jugs which are producible with a single core mould.

Other systems have been proposed which clamp the heater in position using a clamping means acting against the heater. Such clamping means have included a number of pillars extending from a base cover of the vessel to engage the heater or a clamping ring held in place by a plurality of screws which engage in mounting bosses provided on the vessel body. However, such systems are not entirely satisfactory as they do not adequately take account of certain problems which arise in plastics vessels.

DE 299 03 592 U discloses a water heating vessel having a removable and replaceable heater plate. A spring ring is inserted in the base of the vessel to hold the heater plate in place.

The major problem is the thermal expansion of the vessel body during use. A typical polypropylene jug body may increase in length and diameter by up to about 1mm, and the mounting needs to be able to compensate for such movement while still maintaining a satisfactory seal between the vessel body and the heater. At the same time the forces applied to the vessel to ensure satisfactory sealing should not be so great as to cause thermal creep of the vessel during use, which in time could lead to relaxation of the seal and leakage. The mounting pillars referred to above do not adequately accommodate expansion whilst the clamping screws exert locally very high forces which can lead to thermal creep. Indeed, the prior art clamping arrangements are substantially rigid and rely upon the resilience of the seal to accommodate any expansion or movement. This is not ideal

Accordingly, what is required is a system for mounting a heater in the base of a liquid heating vessel which is easy to implement and which provides satisfactory sealing irrespective of the thermally induced movement of the heater and the vessel body in use, particularly in plastics bodied vessels.

From a first aspect, therefore, the present invention provides a liquid heating vessel having a body and a heater mounted in a base portion of the body, said vessel body comprising an annular surface for receiving a seal, a seal arranged between the heater and the annular surface, and axially compressible spring means arranged to exert an axial biasing force for sealing the seal against the annular surface, wherein the spring means comprises one or more coil springs arranged between a mounting location provided in the base of the vessel and the heater.

Thus in accordance with the invention, axially compressible (i.e. compressible axially of the vessel) spring means apply an axial spring force to effect sealing of the heater in the vessel base. The biasing force maintains the pressure on the seal even in circumstances where movement of the vessel body and heater occurs so as to prevent leakage. Furthermore, the sealing force provided by the spring means can be tailored so that irrespective of the movement of the vessel body the sealing force can be kept sufficiently high as to ensure satisfactory sealing but at the same time not be so high as to lead to thermal creep of the vessel body.

Preferably, the spring means is configured so as to have a relatively low spring rate whereby the spring biasing force is relatively constant even with thermal movement of the vessel body.

Preferably the spring means is made from a metallic material for strength and heat resistance, and most preferably from a metallic material having a relatively low thermal conductivity, for example stainless steel.

The springs will act to dissipate some heat from the heater in an overheat situation, thereby helping to prevent overshoot at the edges of the heater in contact with the seal.

Preferably at least 5, more preferably at least 6, for example at least eight springs are provided, depending on the size of the heater. In practice the sealing force exerted by the spring means should be sufficient to maintain the seal under the expected operating conditions but not be so high as to cause creep in the vessel. It should also be sufficient to resist being displaced by a force applied to the upper surface of the heater, eg during cleaning. Such force levels may be determined empirically by the skilled person, but typically may be between 30 and 75kg.

The mounting locations for the spring means may be provided on any suitable part of the vessel, for example in a base cover of the vessel, but preferably the locations are provided in a lower wall part of the vessel body below the heater.

The mounting locations may, for example, take the form of a groove which extends around the inner circumference of the vessel wall or more preferably a plurality of discrete rebates into which the springs locate.

The vessel wall below the groove or rebate may be thickened so as effectively to increase the depth of the groove or rebate without overly thinning the vessel wall which may then lose strength. Such features can be easily incorporated in bullet shaped mouldings by, for example providing a sliding core or angled ejectors or even by deformation of the moulding whilst it being removed from the mould whilst still hot and flexible.

Means may be provided for retaining the springs in the groove or rebates. For example, a base cover for the vessel may partially overlap the groove or rebate to prevent inward movement of the springs. Most preferably the cover may have an upstanding peripheral wall for this purpose.

The diameter of the bottom wall part is preferably such that the spring means may be inserted axially into the bottom of the vessel.

The ability to insert a biasing spring substantially axially into the bottom of the vessel is a significant advantage in manufacturing terms.

The heater, seal and vessel are preferably configured so that there is no contact between the heater and the vessel body. Rather, the heater merely contacts the seal which in turn contacts the sealing surface provided in the vessel wall. This reduces the transfer of heat to the vessel wall and means that the heater is effectively free floating on the vessel body and is thus better able to accommodate movement.

The seal may take any suitable form. For example it may be a simple "O" ring type seal or a seal with a rectangular cross section which is compressed between an upper surface of the heater and the vessel body sealing surface. Alternatively it may have a generally C-shaped section, for extending around and receiving a peripheral edge of the heater. Preferably, however, the seal has a generally U-shaped or V-shaped section.

The spring means may act directly on the heater or, for example in the case of a C section seal, on the seal. Most preferably the spring means acts on the peripheral region of the heater or seal.

Preferably the heater has a peripheral flange to receive the seal which may then act to centre the heater in the vessel opening. For this purpose, the flange may be L-shaped or U-shaped.

The sealing surface provided in the vessel wall may comprise a flange extending inwardly from the vessel wall, or more preferably it is formed in the vessel wall itself, e.g. as a step in the wall. The sealing surface may extend generally perpendicularly to the vessel axis.

In the preferred embodiment, however, the sealing surface is defined by a generally vertical lip depending from the vessel body. This arrangement is particularly suited for use with a U-shaped or V-shaped seal as discussed above, and from a further aspect, the invention provides a liquid heating vessel comprising a heater mounted in an opening in the base thereof, said heater comprising a peripheral channel receiving an annular seal having a U-shaped or V-shaped cross section, said seal engaging with a vertically extending lip provided around the said opening.

In the region of the sealing surface, the wall thickness of the vessel body may change abruptly. Due to the shrinkage of material after moulding, this may lead to witness marks on the external face of the vessel, which would be unsightly. Accordingly, in accordance with a preferred arrangement, the external surface of the vessel is provided with means to disguise such marks.

In a preferred arrangement, the external surface of the vessel wall in the region of said flange is provided with formation means for disguising any shrinkage marks which might form in that region.

The formation may comprise a suitable pattern which would break up any witness mark, and preferably comprises at least one circumferentially extending rib. In another arrangement, the formation may be a groove for receiving a separate band, ring or length of adhesive tape which extends around the region.

An embodiment of the invention will now be described by way of example only, together with other arrangements described herein for illustrative and reference purposes only, with reference to the accompanying drawings in which:
Figure 1 shows a kettle to which the present invention can be applied;
Figure 2 shows for reference purpose only a sectioned detail of the highlighted region of the kettle of Figure 1, showing an illustrative mounting arrangement of the heater within the kettle;
Figure 3 shows an alternative heater mounting arrangement also shown for reference only;
Figure 4 shows an exploded view of the arrangement of Figure 3;
Figure 5 shows a mounting arrangement in accordance with the invention;
Figure 6 shows a yet further illustrative mounting arrangement for reference purposes only;
Figure 7 shows a yet further illustrative mounting arrangement for reference purposes only;
Figure 8 shows a yet further illustrative mounting arrangement for reference purposes only; and
Figure 9 shows a vessel body for use in the invention;

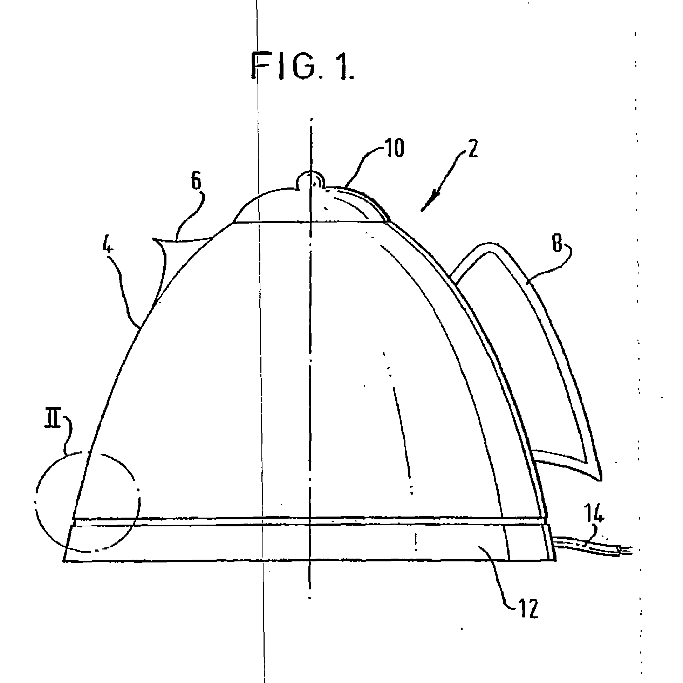

With reference to Figure 1, a liquid heating vessel in the form of a cordless kettle 2 comprises a vessel body 4 moulded from polypropylene or a similar plastics material. A pouring spout 6, a handle 8 and a lid 10 are mounted to the vessel body 4.

The vessel body 4 sits on a separate power base 12 to which power is supplied through a power lead 14.

The vessel body 4 is moulded in a single draw mould, thereby avoiding the need for complicated mould core arrangements. Accordingly, the vessel body 4 is shaped such that there are no substantial re-entrant shapes which would otherwise prevent easy parting of the mould parts. Accordingly, a heater cannot be mounted in the base of the vessel by an arrangement as described in WO96/18331, and an alternative system needs to be employed.

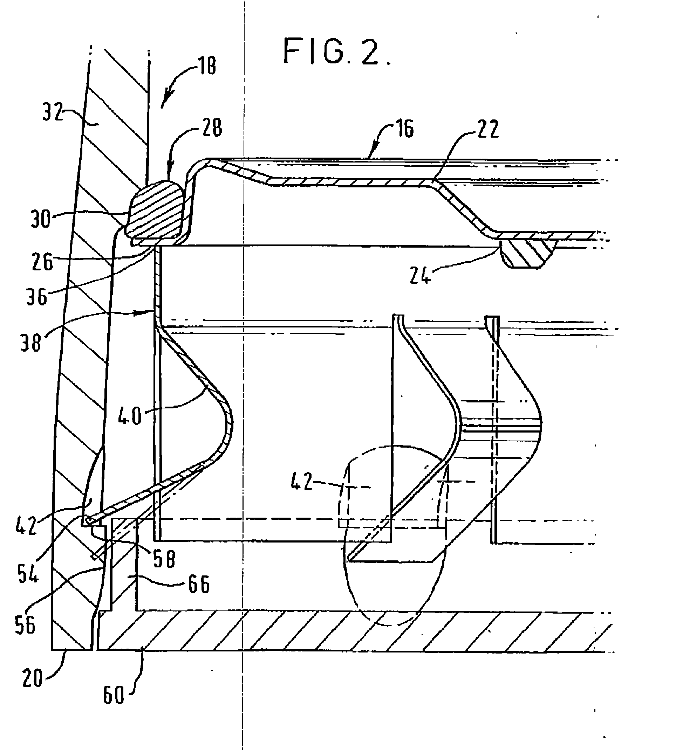

As can be seen in Figure 2, the kettle 2 is provided with a planar heater 16 arranged to close the bottom 18 of the vessel body 4 adjacent the base 20 of the vessel body 4. The heater 16 comprises a generally planar stainless steel metal plate 22 which mounts a sheathed heating element 24 on a central portion thereof by means known *per se*. A thermally sensitive control and an electrical connector (not shown) are also mounted to the heater plate 22 in a manner known per se.

The heater plate 22 is provided with an L-shaped peripheral flange 26 which in use receives a resilient sealing ring 28 of silicone rubber or a similar material. The sealing ring 28 engages within and seals with an annular sealing surface 30 moulded into the lower wall part 32 of the vessel body 4.

It will be seen that the peripheral flange 26 of the heating plate 22 does not extend to the vessel wall 32 in either the radial or axial directions and that it is in contact with only the sealing ring 28. The heater 16 is thus effectively floatingly mounted in the vessel base, the sealing ring 28 acting to centre the heater 16 in the opening 18 in the vessel base. This is advantageous as there is thus no direct thermal contact between the heater 16 and the vessel wall 32 which might lead to local overheating of the vessel wall in an overheat situation.

In the illustrative arrangement of Figure 2, given for reference purposes only. The underside of the peripheral flange 26 of the heater plate 22 is abutted by the upper end 36 of a spring 38. The spring 38 is generally cylindrical, and is formed with eight depending spring tongues 40 which engage in corresponding rebates 42 provided in the lower wall 30 of the vessel body 4.

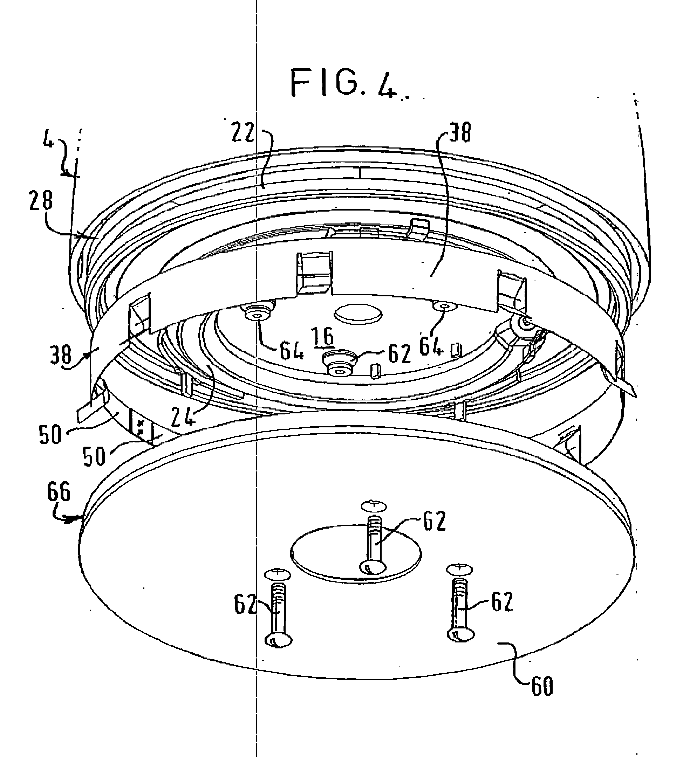

A base cover 60 is suitably mounted to close the bottom end 20 of the vessel body 4 by screws 62 which locate in mounting bosses 64 in the heater 24 (see Figure 4). The outer periphery of the base cover 60 is provided with an upstanding wall 66 which, in the assembled condition, extends above the ledge 58 of the rebate 42 so as to prevent the spring tongue 40 from moving out of the rebate 42.

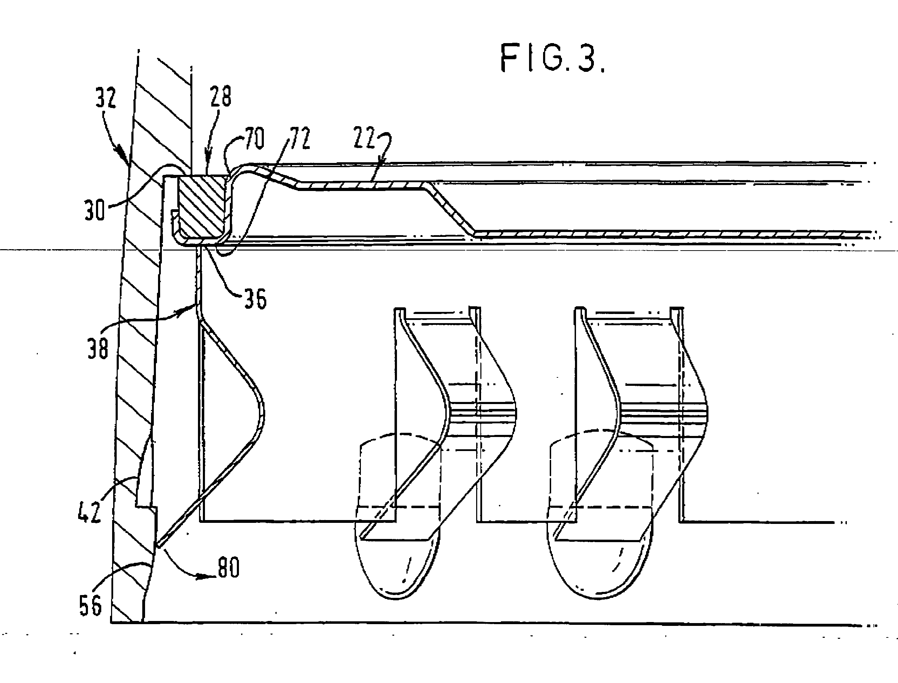

Turning to Figure 3, this shows also for reference only a similar arrangement to that of Figure 2 but using a slightly different form of heater plate 22. Similar reference numerals are used in this embodiment for features in common with the embodiment of Figure 2.

In this arrangement, the heater plate 22 comprises a generally U-shaped peripheral channel 70 which receives the seal 28. The sealing surface 30 in the vessel wall 32 is generally perpendicular to the axis of the vessel and is abutted by the seal 28. Again the heater does not touch the vessel wall 32. The spring 38 and rebates 42 in this arrangement are the same as that shown in Figure 2.

Assembly of the illustrative arrangement shown in Figure 3 will now be described with reference to Figure 4. The method of assembly is generally the same for the arrangement of Figure 2.

Firstly, the seal 28 is located in the peripheral channel 70 of the heater plate 22. The assembled seal and heater plate can then be introduced into the bottom of the vessel body 4 such that the seal 28 abuts the sealing surface 30 in the vessel wall 32 as shown in Figure 3. The spring 38 is then inserted into the bottom of the vessel body 4 in a generally axial direction so that its upper end 36 abuts the lower surface 72 of the peripheral channel 70 of the heater plate 22. The spring tongues 40 are deflected radially inwardly in the direction of the arrow 80 in Figure 3 as they move over the tapering surfaces 56 below the rebates 42. The spring tongues 40 are then pressed further upwardly so that they snap into the rebates 42 thereby providing a resilient biasing force on the lower surface 72 of the heater plate channel 70 to compress the seal 32 against the sealing surface 30 of the vessel body wall 32. In this way only axially applied forces are required to install the heater, which has significant advantages in assembly.

Finally, the base cover 60 is mounted to the bottom of the vessel body 4 so that the peripheral wall 64 thereof extends above the ledge 58 of the rebates 42 to prevent the tongues 40 becoming disengaged from those rebates.

It will be appreciated that should the heater 22 need to be removed from the vessel for whatever purpose, for example to allow re-working of the vessel, the base cover 60 can be removed and the spring tongues 40 released so as to permit unmounting of the heater 22.

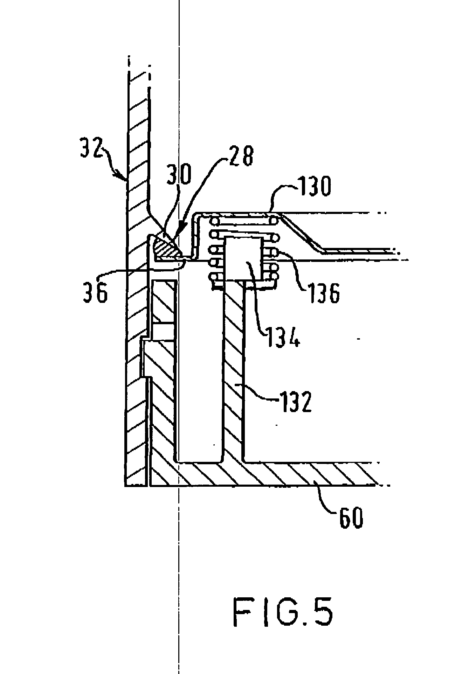

Figure 5 shows an embodiment of the present invention in which the heater plate 22 is provided with a groove or series of indentations 130 inwardly of a peripheral flange 36. The base cover 60 comprises a peripheral wall 132 having a plurality of mounting posts 134 at the top thereof. The mounting posts mount a plurality (e.g. twelve) coil springs 136 which act against the underside of the groove or formations 130 so as to bias the flange 36 of the heater against the seal 28, and the seal against the wall sealing surface 30. As in the earlier arrangements, the heater plate 22 does not touch the wall 32 of the vessel, and accordingly is mounted in a floating manner.

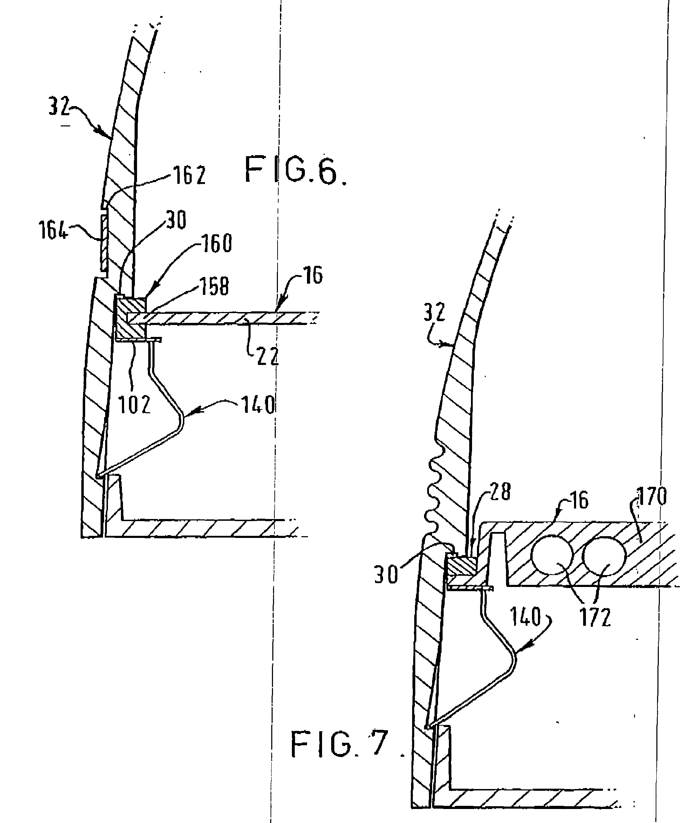

Figure 6 shows a yet further illustrative arrangement for reference purposes only. In this arrangement, the heater 16 does not have a shaped flange around its periphery, but has an essentially planar periphery 158 which is received within a C-sectioned seal 160 whose upper end engages with the beaded sealing surface 30. The planar surface 102 of the spring 140 engages the underside of the seal 160, and the axial force applied is sufficient to seal between the seal and the vessel body and the seal and the heater plate 22. This form of mounting is particularly suited to mounting completely planar heaters such as thick film heaters which are commonly formed in this way.

In this arrangement also, the formation provided on the outside of the vessel body in the region of the flange 30 comprises a groove 162 into which groove is located for example a metal band 164 which will cover any witness marks in the vessel body.

Figure 7 shows a yet further illustrative arrangement for reference only wherein the heater 16 is a die cast heater comprising a body 170 of aluminium or aluminium alloy into which has been cast a sheathed heating element 172. The upper surface of the heater is generally planar, but it could have other profiles.

The heater 16 is provided with a peripheral L-shaped flange 174 for receiving a seal 28 which engages with the beaded vessel sealing surface 30. The upper surface 102 of the spring 140 engages the underside of the flange 174.

The vessel wall 32 is also provided with corrugations 176 in the region of the sealing surface 30 in order to disguise any shrinkage marks which may form in that region.

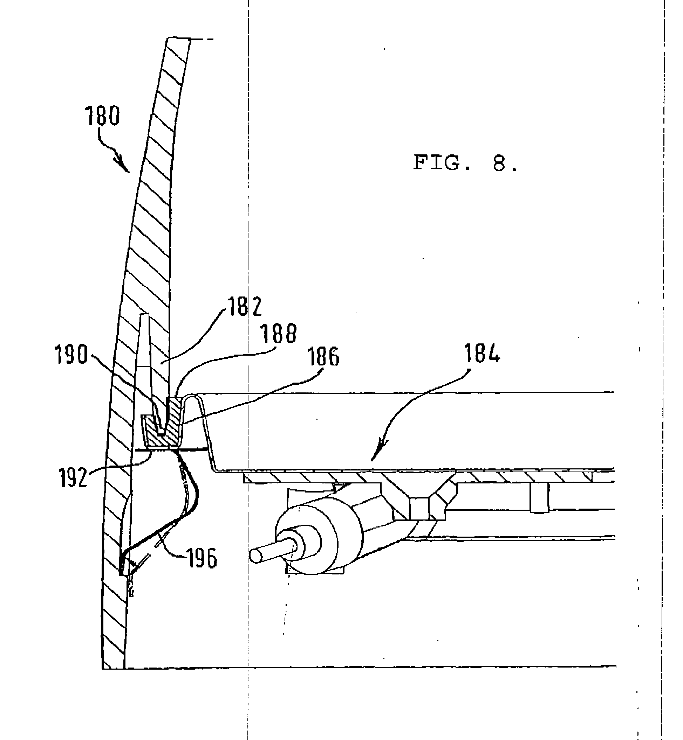

Figures 8 shows a yet further illustrative arrangement for reference only wherein the vessel body 180 is formed with an elongated, generally vertical lip 182. The heater 184 comprises a peripheral mounting channel 186 which receives a seal 188 having a generally U-shaped cross-section. As can be seen from Figure 8, the lower end 190 of the lip 182 is received within the U-shaped seal 188.

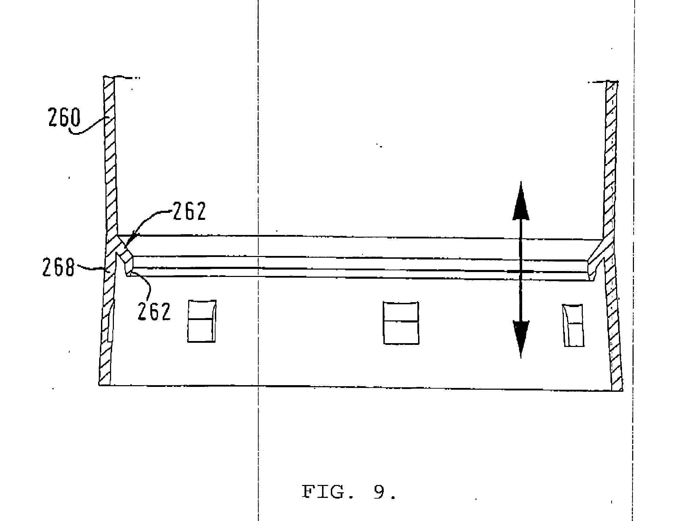

Figure 9 shows an adaptation of a vessel body for use in the present invention. In this embodiment, a vessel body 260 is formed with a generally vertically extending lip 262 with which providing a lower sealing surface 266. This arrangement is particularly useful in vessels having generally straight walls 260, allowing a moulding tool more easily to form the radially outer surface 268 of the wall 262.

In the embodiments discussed above the lower part of the vessel body, including the sealing surface may be co-moulded with the vessel wall or manufactured as a separate component and subsequently welded or otherwise attached to the vessel wall.

It will be appreciated that the mounting arrangements of the present invention are ideally suited for use in plastics vessels where they overcome movement of the heater, vessel walls and other components without degrading the quality of the seal. The invention also allows a mounting system for use in single-draw mouldings which allows vessels to be produced more economically, and simplifies assembly of the vessel.

Whilst the invention has been described in the above embodiments in the context of sheathed heaters, the planar heater may equally be a thick film heater. Also, as will be apparent from the embodiments, the term planar as used herein is intended to cover heater arrangements which are not entirely planar, but generally any plate-like heater mounted in the bottom of a liquid heating vessel. Furthermore, while the mounting of the invention is particularly suited for use in plastic walled vessels, more particularly ones with a "bullet" profile, it is also suited for use in other vessels for example of metal or glass.

The mounting arrangements described give extremely good sealing of the heater in the vessel and at the same time allow removal of the heater should that prove necessary. The components can then be reused as appropriate. Also, using springs rather than fasteners such as screws to retain the heater in place represents a very significant cost saving.

Furthermore, the invention is not limited to securing circular heaters in position, and it can be used to secure any shape of heater.

## Claims

1. A liquid heating vessel having a body and a heater mounted in a base portion of the body, said vessel body (32) comprising an annular surface (30) for receiving a seal (28), a seal (28) arranged between the heater and the annular surface (30), and axially compressible spring means arranged to exert an axial biasing force for sealing the seal (28) against the sealing surface (30), **characterised in that** the spring means comprises one or more coil springs (136) arranged between a mounting location (132) provided in the base (60) of the vessel and the heater.

2. A liquid heating vessel as claimed in claim 1 wherein the spring means is configured so as to have a relatively low spring rate.

3. A liquid heating vessel as claimed in claim 1 or 2 wherein the spring means is made from a metallic material, preferably from a metallic material having a relatively low thermal conductivity.

4. A liquid heating vessel as claimed in any preceding claim wherein mounting location (132) for the spring means is provided in a lower wall part of the vessel body below the heater.

5. A liquid heating vessel as claimed in claim 4 wherein the mounting location comprises groove or a plurality of discrete rebates into which the spring means engages.

6. A liquid heating vessel as claimed in claim 5 wherein the vessel wall below the groove or rebate is thickened.

7. A liquid heating vessel as claimed in claim 4, 5 or 6 further comprising means (134) for retaining the spring means in the mounting location (132).

8. A liquid heating vessel as claimed in claim 7 wherein said retaining means is provided on a part of a base cover for the vessel which partially overlaps the mounting location.

9. A liquid heating vessel as claimed in any preceding claim wherein the diameter of the bottom wall part of the vessel is such that the spring means can be inserted axially into the bottom of the vessel.

10. A liquid heating vessel as claimed in any preceding claim wherein the heater, seal and vessel are configured so that there is no contact between the heater and the vessel body.

11. A liquid heating vessel as claimed in any preceding claim wherein the heater has a peripheral flange to receive the seal.

12. A liquid heating vessel as claimed in claim 11 wherein said heater has a peripheral channel which receives a generally U-shaped or V-shaped section seal.

13. A liquid heating vessel as claimed in any preceding claim wherein the spring means acts directly on the heater.

14. A liquid heating vessel as claimed in any preceding claim wherein the spring means acts on the peripheral region of the heater.

15. A liquid heating vessel as claimed in any preceding claim wherein the annular surface for receiving the seal is formed in the wall of the vessel.

16. A liquid heating vessel as claimed in any preceding claim wherein said sealing surface comprises a generally vertically extending lip.

## Patentansprüche

1. Flüssigkeitsheizgefäß mit einem Körper und einer in einem Basisabschnitt des Körpers angebrachten Heizeinrichtung, wobei der Gefäßkörper (32) umfasst: eine ringförmige Fläche (30) zur Aufnahme einer Dichtung (28), eine zwischen der Heizeinrichtung und der ringförmigen Fläche (30) angeordnete Dichtung (28) und ein axial zusammendrückbares Federmittel, welches derart angeordnet ist, dass es eine axiale Vorspannkraft ausübt, um die Dichtung (28) gegenüber der Dichtfläche (30) abzudichten, **dadurch gekennzeichnet, dass** das Federmittel eine oder mehrere Schraubenfedern (136) umfasst, welche zwischen einer in der Basis (60) des Gefäßes vorgesehenen Montagestelle (132) und der Heizeinrichtung angeordnet ist/sind.

2. Flüssigkeitsheizgefäß nach Anspruch 1, wobei das Federmittel derart konfiguriert ist, dass es eine relativ niedrige Federkonstante hat.

3. Flüssigkeitsheizgefäß nach Anspruch 1 oder 2, wobei das Federmittel aus einem metallischen Material, vorzugsweise aus einem metallischen Material mit einer relativ geringen Wärmeleitfähigkeit hergestellt ist.

4. Flüssigkeitsheizgefäß nach einem der vorhergehenden Ansprüche, wobei die Montagestelle (132) für das Federmittel in einem unteren Wandteil des Gefäßkörpers unter der Heizeinrichtung vorgesehen ist.

5. Flüssigkeitsheizgefäß nach Anspruch 4, wobei die Montagestelle eine Aussparung oder eine Mehrzahl von einzelnen Nuten umfasst, in welche das Federmittel eingreift.

6. Flüssigkeitsheizgefäß nach Anspruch 5, wobei die Gefäßwand unterhalb der Aussparung oder Nut verdickt ist.

7. Flüssigkeitsheizgefäß nach Anspruch 4, 5 oder 6 ferner umfassend ein Mittel (134) zum Halten des Federmittels an der Montagestelle (132).

8. Flüssigkeitsheizgefäß nach Anspruch 7, wobei das Haltemittel an einem Teil einer Basisabdeckung für das Gefäß vorgesehen ist, welche die Montagestelle teilweise überlappt.

9. Flüssigkeitsheizgefäß nach einem der vorhergehenden Ansprüche, wobei der Durchmesser des Bodenwandteils des Gefäßes derart ist, dass das Federmittel axial in den Boden des Gefäßes eingesetzt werden kann.

10. Flüssigkeitsheizgefäß nach einem der vorhergehenden Ansprüche, wobei die Heizeinrichtung, die Dichtung und das Gefäß derart aufgebaut sind, dass zwischen der Heizeinrichtung und dem Gefäßkörper kein Kontakt besteht.

11. Flüssigkeitsheizgefäß nach einem der vorhergehenden Ansprüche, wobei die Heizeinrichtung einen peripheren Flansch zur Aufnahme der Dichtung hat.

12. Flüssigkeitsheizgefäß nach Anspruch 11, wobei die Heizeinrichtung einen peripheren Kanal hat, welcher eine im Allgemeinen U-förmige oder V-förmige Profildichtung aufnimmt.

13. Flüssigkeitsheizgefäß nach einem der vorhergehenden Ansprüche, wobei das Federmittel direkt auf die Heizeinrichtung einwirkt.

14. Flüssigkeitsheizgefäß nach einem der vorhergehenden Ansprüche, wobei das Federmittel auf den Umfangsbereich der Heizeinrichtung einwirkt.

15. Flüssigkeitsheizgefäß nach einem der vorhergehenden Ansprüche, wobei die ringförmige Fläche zur Aufnahme der Dichtung in der Wand des Gefäßes ausgebildet ist.

16. Flüssigkeitsheizgefäß nach einem der vorhergehenden Ansprüche, wobei die Dichtungsfläche eine sich im Allgemeinen vertikal erstreckende Lippe umfasst.

## Revendications

1. Récipient destiné à réchauffer un liquide, comprenant un corps et un élément chauffant monté dans une partie de base du corps, ledit corps de récipient (32) comprenant une surface annulaire (30) destinée à recevoir un joint (28), un joint (28) disposé entre l'élément chauffant et la surface annulaire (30), ainsi que des moyens à ressort compressibles dans le sens axial, agencés de manière à exercer une force de sollicitation axiale pour sceller le joint (28) contre la surface d'étanchéité (30), **caractérisé en ce que** les moyens à ressort comprennent un ou plusieurs ressorts à enroulement (136) disposés entre un emplacement de montage (32) prévu dans la base (60) du récipient et l'élément chauffant.

2. Récipient destiné à réchauffer un liquide selon la revendication 1, dans lequel les moyens à ressort sont configurés de manière à avoir une constante de rappel relativement faible.

3. Récipient destiné à réchauffer un liquide selon la revendication 1 ou 2, dans lequel les moyens à ressort sont faits d'un matériau métallique, de préférence d'un matériau métallique ayant une conductivité thermique relativement faible.

4. Récipient destiné à réchauffer un liquide selon l'une quelconque des revendications précédentes, dans lequel l'emplacement de montage (132) pour les moyens à ressort est positionné dans une partie de paroi inférieure du corps de récipient en dessous de l'élément chauffant.

5. Récipient destiné à réchauffer un liquide selon la revendication 4, dans lequel l'emplacement de montage comprend une rainure ou une pluralité d'entailles distinctes dans lesquelles les moyens à ressort entrent en prise.

6. Récipient destiné à réchauffer un liquide selon la revendication 5, dans lequel la paroi du récipient en dessous de la rainure ou des entailles est épaissie.

7. Récipient destiné à réchauffer un liquide selon la revendication 4, 5 ou 6, comprenant en outre des moyens (134) destinés à retenir les moyens à ressort dans l'emplacement de montage (132).

8. Récipient destiné à réchauffer un liquide selon la revendication 7, dans lequel lesdits moyens de retenue sont positionnés sur une partie d'un couvercle de base pour le récipient, qui chevauche partiellement l'emplacement de montage.

9. Récipient destiné à réchauffer un liquide selon l'une quelconque des revendications précédentes, dans lequel le diamètre de la partie de paroi inférieure du récipient est tel que les moyens à ressort peuvent être insérés axialement dans le dessous du récipient.

10. Récipient destiné à réchauffer un liquide selon l'une quelconque des revendications précédentes, dans lequel l'élément chauffant, le joint et le récipient sont configurés de manière à ce qu'il n'y ait pas de contact entre l'élément chauffant et le corps du récipient.

11. Récipient destiné à réchauffer un liquide selon l'une quelconque des revendications précédentes, dans lequel l'élément chauffant présente une bride périphérique destinée à recevoir le joint.

12. Récipient destiné à réchauffer un liquide selon la revendication 11, dans lequel ledit élément chauffant présente un canal périphérique qui reçoit un joint dont le profil en coupe est généralement en forme de U ou de V.

13. Récipient destiné à réchauffer un liquide selon l'une quelconque des revendications précédentes, dans lequel les moyens à ressort agissent directement sur l'élément chauffant.

14. Récipient destiné à réchauffer un liquide selon l'une quelconque des revendications précédentes, dans lequel les moyens à ressort agissent sur la zone périphérique de l'élément chauffant.

15. Récipient destiné à réchauffer un liquide selon l'une quelconque des revendications précédentes, dans lequel la surface annulaire destinée à recevoir le joint est formée dans la paroi du récipient.

16. Récipient destiné à réchauffer un liquide selon l'une quelconque des revendications précédentes, dans lequel ladite surface d'étanchéité comprend une lèvre s'étendant dans un sens généralement vertical.
